Europäisches Patentamt

European Patent Office

Office européen des brevets

(19)

(11) Publication number: **0 333 289**

**A1**

## EUROPEAN PATENT APPLICATION

(21) Application number: **89200643.8**

(22) Date of filing: **14.03.89**

(51) Int. Cl.⁴: **B65D 85/52 , A01G 31/02**

(30) Priority: **15.03.88 NL 8800630**

(43) Date of publication of application:
**20.09.89 Bulletin 89/38**

(84) Designated Contracting States:
**BE DE FR NL**

(71) Applicant: **NIBO WITLOFKWEKERIJEN B.V.**
**Thorbeckelaan 9**
**NL-2805 CA Gouda(NL)**

(72) Inventor: **Both, Nicolaas**
**Ridder v. Catsweg 242**
**NL-2805 BC Gouda(NL)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

(54) **A method of, and a container for, packing vegetables for sale, in particular chicory.**

(57) A method of, and a container for, packing chicory for sale. A plurality of chicory roots are placed in a box (4) in upright, juxtaposed relationship in a moist growth bed layer, enveloped by a flexible, waterproof inner packing (1), with the upper portion of the inner packing being folded over the roots. A box cover portion (3) is telescoped over the box and when growth has been initiated by adding water and increasing the storage temperature, the box cover portion can be pushed upwards by the growing chicory plants, thereby permanently shielding the plants from light.

FIG.2

EP 0 333 289 A1

# A method of, and a container for, packing vegetables for sale, in particular chicory

This invention relates to a method of, and a container for, packing vegetables for sale, in particular chicory.

It is known to sell certain vegetables, for example garden cress, and various garden herbs, such as chives, parsley and celery, in plant form, so that the desired quantity thereof can be used in dishes. Hitherto, chicory has not yet been presented to the consumer in plant form, probably partly because it is assumed that chicory can be cultivated only under very specific conditions in specialized gardening facilities.

The present invention provides a method and a container making allowance for, and using the fact that chicory has to be cultivated in the dark (to prevent greening) and that the growth of chicory can be temporarily stagnated by temperature control.

The method according to the present invention is characterized by packing chicory roots, placed in upright, laterally supported position in a suitable growing medium, such as moist peat moss, in a container suitable for storing the plants in the dormant state at a low temperature in the order of 0°- 2° C, and for growing then at a higher temperature in the order of 14°-18° C and under suitable conditions of aeration and moisture and in the absence of light.

The present invention further provides a container for use in the method, comprising a box bottom portion, a box cover portion telescoping thereover, which together form the overpack box, and an inner packing made of waterproof, flexible material, having an open-ended upper portion which, in stretched condition, projects above the box bottom portion.

Such a container can be offered for sale with, for instance, 16 to 20 chicory roots in juxtaposed, upright relationship and supported laterally by the upright sidewalls of the box bottom portion, in the inner packing on a moist layer of peat moss or like growth bed, with the top end of the inner packing folded over it and with the box cover portion pushed entirely over the box bottom portion. At a storage temperature of 0°-2° C, the growth of the plants can be stagnated for some months, so that the container can be transported in a refrigerated shipping container over long distances (by sea).

The consumer can initiate the growth by bringing the box at cultivation temperature (depending on the season, between approx. 14° C and approx. 18° C), adding water and making a small opening in the inner packing. With the cover portion slid over the bottom portion, the chicory starts to grow in the dark and thereby pushes the cover portion upwards relatively to the bottom portion. The flexible inner packing conforms to the height of the chicory plants. The simplest form of inner packing is a plastic bag.

Water has to be added periodically, according to a schedule possibly indicated on the box. The growth increase can be detected by the position of the cover portion relative to the bottom portion, without the necessity of opening the container, which would expose the chicory to light unnecessarily.

Furthermore, according to the present invention, the box may be provided with various indications or aids for the consumer, such as a cultivation prescription, a temperature table, marks which relate the relative telescoping position of the overpack box portions to the growth phase and the like.

Preferably, according to the present invention, the chicory roots are packed so as to produce selling units, each consisting of a selling container as described above, wherein 16 to 20 chicory roots are placed in a moist growth bed layer in the inner packing in juxtaposed, upright relationship and are supported laterally in the box bottom portion, with the top portion of the inner packing being folded over the roots and the cover portion being slid entirely over the bottom portion.

One embodiment of the selling unit for chicory plants according to the present invention will now be described, by way of example, with reference to the accompanying drawings, in which:

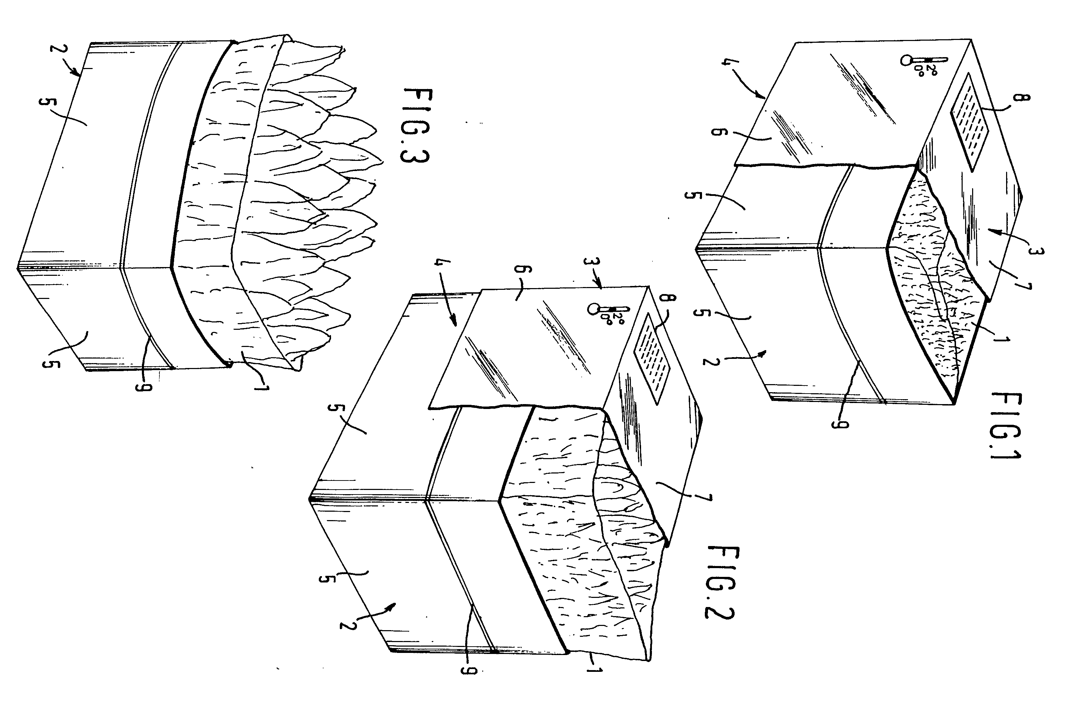

Figs. 1-3 are diagrammatic, perspective views, which illustrate different growth phases of packaged chicory plants.

As shown in the drawings, a selling unit for chicory plants contains a plurality of chicory roots in a flexible inner packing 1, which is received in an overpack box 4, consisting of a bottom portion 2 and a cover portion 3.

In the embodiment shown, the box bottom portion has a rectangular shape with upright sidewalls and the box cover portion 3 with sidewalls 6 extending downwards from the upper wall 7, fits slidingly over the upright walls 5 of bottom portion 2.

The inner packing 1 is a plastic bag projecting in stretched condition over the lower portion 2. In the inner packing 1, a group of chicory roots are placed in upright position in a growth bed, e.g. a peat moss layer, with the height of the overpack box being chosen in such a manner that when the box is closed, there is still sufficient space above the roots to accommodate the portion of inner packing 1 folded over the roots.

The box may have various indications for the consumer with respect to storage and cultivation, such as a storage temperature of 0° -2° C, at which temperature the plants are dormant, i.e., thin growth is stagnated, cultivation temperatures which for the months of November/December are approx. 18° C, for January/February approx. 16° C and for March/May approx. 14° C. Besides, a Table 8 may be provided wherein the water dosing during cultivation can be recorded by the consumer, according to prescription, which may also be indicated on the box.

An example of such a water dosing table is:
- beginning (see cultivation instructions)
- 7th day...
- l2th day...
- l6th day...
- 19th day...
- 21st day... harvesting

Another aid for the consumer is a mark 9 on the box bottom portion 2. As soon as box bottom portion 3 has been pushed so far up by the growing chicory that mark 9 becomes visible, the chicory is ready for being harvested.

## Claims

1. A method of packing chicory for sale, characterized by packing chicory roots, placed in upright, laterally supported position in a suitable growing medium, such as moist peat moss, in a container suitable for storing the plants in the dormant state at a low temperature in the order of 0° - 2° C, and for growing then at a higher temperature in the order of 14° -18° C and under suitable conditions of aeration and moisture and in the absence of light.

2. A selling container for use in the method of claim 1, comprising a box bottom portion (2), a box cover portion (3) telescoping thereover, which together form an overpack box, and an inner packing (1) made of waterproof, flexible material, having an open-ended upper portion which, in stretched condition, projects above the box bottom portion (2).

3. A selling container as claimed in claim 2, characterized in that the inner packing (1) is a plastic bag.

4. A selling container as claimed in claim 2 or 3, characterized in that the box is provided with various indications or aids for the consumer, such as a cultivation prescription, a temperature table, marks relating the relative telescoping position of the overpack box portions to the growth phase and the like.

5. A selling unit comprising a container as claimed in any one of the preceding claims, containing 16 to 20 chicory roots, placed in a moist growth bed layer, in the inner packing (1), in juxtaposed, upright relationship, said roots being supported laterally in the box bottom portion (2), with the upper portion of the inner packing (1) being folded over the roots and the cover portion (3) being slid fully over the bottom portion (2).

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | NL-A-  44 624  (GARDNER)<br>* Page 1, line 71 - page 2, line 17; figures 1,2 *<br>--- | 1,5 | B 65 D  85/52<br>A 01 G  31/02 |
| A | US-A-3 539 360  (WOOD)<br>* Column 2, lines 44-46; column 3, line 21 - column 4, line 10; figures 7,8 *<br>--- | 2,3 | |
| A | BE-A-  471 291  (GARRIC)<br>* Page 4, line 18 - page 5, line 12; figures *<br>--- | 4 | |
| A | US-A-3 961 444  (SKAIFE)<br>* Column 3, line 63 - column 4, line 13; figures 13-15 *<br>--- | 1,2,5 | |
| A | FR-A-2 555 016  (REKO)<br>* Page 5, lines 5-16; page 5, lines 28-34; figure 7 *<br>--- | 1,5 | |
| A | US-A-3 314 194  (HALLECK)<br>--- | | TECHNICAL FIELDS SEARCHED (Int. Cl.4) |
| A | AU-A-  488 145  (BREVETEAM)<br>----- | | B 65 D<br>A 01 G |

The present search report has been drawn up for all claims

| Place of search | Date of completion of the search | Examiner |
|---|---|---|
| THE HAGUE | 12-06-1989 | MARTENS L.G.R. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)